# EUROPÄISCHE PATENTSCHRIFT

(11) **EP 2 283 174 B1**
(45) Veröffentlichungstag und Bekanntmachung des Hinweises auf die Patenterteilung: **04.01.2012**
(21) Anmeldenummer: 09749914.9
(22) Anmeldetag: 22.05.2009
(51) Int. Cl.: D01D 10/00, D01D 13/00, D01D 11/00, D01D 5/12

(54) **VERFAHREN ZUM SCHMELZSPINNEN, VERSTRECKEN UND AUFWICKELN EINES MULTIFILEN FADENS SOWIE EINE VORRICHTUNG ZUR DURCHFÜHRUNG DES VERFAHRENS**
METHOD FOR MELT-SPINNING, DRAWING, AND WINDING UP A MULTIFILAMENT, AND APPARATUS FOR CARRYING OUT SAID METHOD
PROCÉDÉ DE FILAGE À L'ÉTAT FONDU, D'ÉTIRAGE ET D'ENROULEMENT D'UN FIL MULTIFILAMENT, ET DISPOSITIF DESTINÉ À LA RÉALISATION DU PROCÉDÉ

(30) Priorität: 23.05.2008 DE 102008024962; 04.06.2008 DE 102008026738; 22.08.2008 DE 102008039378
(43) Veröffentlichungstag der Anmeldung: 16.02.2011
(73) Patentinhaber: Oerlikon Textile GmbH & Co. KG, 42897 Remscheid (DE)
(72) Erfinder: WEIGEND, Helmut, 42477 Radevormwald (DE); MEISE, Hansjörg, 42799 Leichlingen (DE); SCHULZ, Detlev, 42897 Remscheid (DE)
(74) Vertreter: Kahlhöfer, Hermann
(86) Internationale Anmeldenummer: PCT/EP2009/056220
(87) Internationale Veröffentlichungsnummer: WO 2009/141424

(56) Entgegenhaltungen:
- WO-A-2004/070092
- WO-A-2007/115703
- US-A- 3 511 905

## Beschreibung

Die Erfindung betrifft ein Verfahren zum Schmelzspinnen, Verstrecken und Aufwickeln eines multifilen Fadens zu einem FDY-Garn und eine Vorrichtung zur Durchführung des Verfahrens gemäß dem Oberbegriff des Anspruchs 9.

Ein gattungsgemäßes Verfahren zum Schmelzspinnen, Verstrecken und Aufwickeln eines multifilen Fadens sowie eine gattungsgemäße Vorrichtung zur Durchführung des Verfahrens sind beispielsweise aus der DE 31 46 054 A1 bekannt.

Bei der Herstellung von synthetischen Fäden wird in Abhängigkeit vom Grad der Orientierung der Molekülketten des Polymerwerkstoffes innerhalb des Fadens zwischen sogenannten POY-Garnen und FDY-Garnen unterschieden. Die Pre Oriented Am (POY) - Garne besitzen eine vororientierte, noch nicht fertig verstreckte Struktur. Derartige Garne werden bevorzugt in einem Strecktexturierprozess weiterverarbeitet. Demgegenüber besitzen die Full Drawn Yarn (FDY) - Garne eine orientierte, fertig verstreckte Struktur. Diese Garne lassen sich somit ohne eine Weiterbehandlung direkt zu einem Flächenprodukt verarbeiten.

Um sogenannte FDY-Garne in einem Einstufenprozess herstellen zu können, werden die frisch extrudierten Filamente nach dem Zusammenführen zu einem Faden vollständig verstreckt und anschließend zu Spulen aufgewickelt. So ist beispielsweise aus der DE 31 46 054 A1 ein Verfahren zur Herstellung eines FDY-Garnes beschrieben. Zunächst wird aus einer Polymerschmelze beispielsweise einem Polyester oder Polyamid eine Vielzahl von Filamenten extrudiert. Die Filamente werden anschließend zum Verfestigen des Polymermaterials abgekühlt und nach der Abkühlung zusammengefasst und mit einem Präparationsfluid benetzt. Der präparierte Faden wird abgezogen und zwischen Galetten verstreckt. Hierbei ist es üblich, dass zur Auslösung eines definierten Streckpunktes der Faden vor dem Verstrecken erwärmt wird. Hierzu ist eine Abzugsgalette mit einem beheizten Galettenmantel vorgesehen, an welchem Umfang der Faden mit einfacher Umschlingung geführt wird. Aufgrund der Streckgeschwindigkeiten, die oberhalb von 4.000 m/min. liegen können, ergeben sich bei einer Teilumschlingung des Fadens an der Abzugsgalette nur sehr kurze Kontaktlängen, um den Faden auf eine dem Streckpunkt auslösende Temperatur zu erwärmen. So lässt sich eine Warmverstreckung bei Erreichung einer Glasumwandlungstemperatur des Fadenmaterials erreichen. Für Polyester liegt dies beispielsweise bei einer Temperatur von ca. 85°. Die bei Teilumschlingung der Galetten realisierte Kontaktlänge zur Erwärmung des Fadens ist somit unzureichend, um eine für alle Filamente umfassende gleichmäßige Durchwärmung des Fadens zu erhalten.

Das bekannte Verfahren und die bekannte Vorrichtung sind nur bedingt geeignet, um eine vollständige Warmverstreckung an dem Faden auszuführen.

Auch durch das in der Druckschrift alternativ vorgeschlagene Verfahren, bei welchem der Faden an der Abzugsgalette mit mehrfacher Umschlingung geführt ist, lässt sich die Warmverstreckung nur durch einen höheren Energie- und Materialeinsatz sowohl an der Abzugsgalette als auch an der Streckgalette realisieren.

Es ist demnach Aufgabe der Erfindung, ein Verfahren zum Schmelzspinnen, Verstrecken und Aufwickeln eines Fadens sowie eine Vorrichtung zur Durchführung des Verfahrens der eingangs genannten Art derart weiterzubilden, dass die Erwärmung des Fadens zum vollständigen Verstrecken mit möglichst geringem Energieeinsatz möglich ist.

Ein weiteres Ziel der Erfindung ist es, ein Verfahren und eine Vorrichtung der gattungsgemäßen Art bereitzustellen, mit welchem eine Mehrzahl parallel gesponnener Filamentbündel möglichst in kompakter Anordnung herstellbar sind. Diese Aufgabe wird erfindungsgemäß durch ein Verfahren mit den Merkmalen des Anspruchs 1 sowie durch eine Vorrichtung zur Durchführung des Verfahrens mit den Merkmalen nach Anspruch 9 gelöst.

Vorteilhafte Weiterbildungen der Erfindung sind durch die Merkmale und Merkmalskombinationen der jeweiligen Unteransprüche definiert.

Der Erfindung liegt die Erkenntnis zugrunde, dass beim Erwärmen des multifilen Fadens sowohl das Fadenmaterial als auch das Präparationsfluid gleichermaßen erwärmt werden muss. So wird vor Erwärmung des präparierten Fadens zunächst der Wasseranteil des Präparationsfluid verdampft und aus dem Filamentverbund herausgelöst.

Auf der Suche nach einer Lösung stellten sich zunächst erhebliche Vorbehalte ein. So ist es allgemein bekannt, dass ein aus mehreren Filamenten zusammengefiigtes Filamentbündel bei jedem Kontakt mit einer Oberfläche elektrostatische Ladungen erfährt, die ein unkontrolliertes Aufweiten des Filamentbündels bewirken. Dieser Effekt verstärkt sich insbesondere bei zunehmenden Fadengeschwindigkeiten. Des Weiteren ist zur Weiterverarbeitung der Fäden die Benetzung der Filamente mit einem Präparationsfluid zwingend erforderlich. Hierbei muss gewährleistet sein, dass eine gleichmäßige Verteilung und Anhaftung des Präparationsfluids an den Filamenten des Filamentbündels stattfindet. Dieser Verfahrensschritt ist jedoch bei hohen Fadengeschwindigkeiten schwieriger zu beherrschen.

Trotz der vielen Vorbehalte wählt die Erfindung einen völlig neuen Weg, in dem die Präparierung des Fadens erst nach dem Verstrecken erfolgt. Hierzu ist die Präparationseinrichtung in einer Fadenlaufzone zwischen der Verstreckeinrichtung und der Aufwickeleinrichtung angeordnet, in welcher der Faden eine Fadenlaufgeschwindigkeit von oberhalb 4.000 m/min. aufweist. Dadurch wurde erreicht, dass das frisch extrudierte Filamentbündel nach dem Abkühlen ohne Zuführung eines Präparationsfluids in trockenem Zustand erwärmt und verstreckt werden kann.

Die Erfindung war auch nicht durch das aus der US 3,840,633 bekannte Verfahren nahegelegt. Bei dem bekannten Verfahren wird ein frisch extrudiertes Filamentbündel mit niedrigen Geschwindigkeiten abgezogen und mit einer maximalen Streckgeschwindigkeit von 1.200 m/min. verstreckt. Hierbei wird das Filamentbündel direkt am Umfang einer Galetten zusammengefasst und abgezogen. Das bekannte Verfahren ist somit völlig ungeeignet, um beispielsweise bei Abzugsgeschwindigkeiten von oberhalb 1.500 m/min das Filamentbündel sicher zu führen. Bereits beim Auflauf auf die Abzugsgalette sind größere Aufspreizungen und somit Unregelmäßigkeiten in der Behandlung unvermeidbar. Aufgrund des offenen Verbundes wirkt an jedem der Filamente eine Reibung, die zu elektrischen Ladungen infolge schlechter Leitfähigkeit der Filamente führen. Dieser Effekt verstärkt sich umso mehr, je höher die Abzugsgeschwindigkeit der Filamente ist. Außerdem ist es üblich, mit einer Abzugsgalette mehrere Filamentbündel parallel nebeneinander aus einer Spinnzone abzuziehen. Dies dürfte mit dem bekannten Verfahren jedoch auch nicht möglich sein, da bei geringen Fadenabständen ein Überspringen einzelner Filamente unvermeidbar ist.

Bei dem erfindungsgemäßen Verfahren und der erfindungsgemäßen Vorrichtung wird das Filamentbündel nach dem Abkühlen zunächst zusammengefasst und dann im bereits gebündelten Zustand durch ein Abzugsmittel vorzugsweise einer Abzugsgalette mit einer Abzugsgeschwindigkeit im Bereich von oberhalb 1.200 m/min, vorzugsweise von oberhalb 1.500 m/min abgezogen, so dass zur Verstreckung der Filamente eine Streckgeschwindigkeit im Bereich von oberhalb 3.500 m/min, vorzugsweise von oberhalb 4.000 m/min erforderlich ist.

Um nach der Verstreckung an dem Filamentbündels bei sehr hohen Fadengeschwindigkeiten von oberhalb 3.500 m/min eine intensive Benetzung der Filamente des Filamentbündels zu erhalten, ist die Verfahrensvariante besonders vorteilhaft, bei welcher das Filamentbündel in einem zwischen zwei angetriebenen Galetten gespannten Fadenstück präpariert wird. Dadurch lässt sich die Fadenspannung durch Einstellung der Umfangsgeschwindigkeiten der Galetten in dem Fadenstück des Filamentbündels auf den Prozessschritt des Präparierens einstellen.

Um dabei eine gleichmäßige Verteilung des Präparationsmittels auf alle Filamente des Filamentbündels zu erreichen, wird das Filamentbündel bevorzugt zum Präparieren an einer gekrümmten Kontaktfläche eines feinporigen Siebbleches geführt, dessen Unterseite kontinuierlich das Präparationsfluid zugeführt wird. Einerseits lässt sich dadurch eine bandförmige Verteilung der Filamente an der Kontaktfläche des Benetzungsmittels erreichen und andererseits lässt sich eine ausreichende Berührlänge an der Kontaktfläche zwischen den Filamenten und der benetzten Oberfläche des Siebbleches realisieren, so dass selbst bei sehr hohen Fadenlaufgeschwindigkeiten von oberhalb 4.000 m/min. eine intensive Benetzung der Filamente möglich ist.

Zum Abziehen und Verstrecken des trockenen Filamentbündels mit hohen Fadenlaufgeschwindigkeiten wird gemäß einer vorteilhaften Weiterbildung der Erfindung das Filamentbündel mit einfachen Umschlingungen am Umfang von angetriebenen Galetten geführt, wobei das Filamentbündel zumindest an der Abzugsgalette in einer umlaufenden Führungsnut geführt ist. Damit wird einerseits die Reibung zwischen den einzelnen Filamenten und der Galettenoberfläche minimiert und andererseits der Zusammenhalt der Filamente in dem Filamentbündel verbessert. Ein weiterer Vorteil dieser Verfahrensvariante liegt darin, dass an einer Galette mehrere Fäden mit geringem Fadenabstand nebeneinander sicher führbar sind.

Um eine Warmverstreckung ausführen zu können, wird das Filamentbündel durch Kontakt zu einer beheizten Oberfläche und / oder ohne Kontakt durch Wärmestrahlung und/oder Konvektion beheizt. Bei üblichen textilen Fadentitern werden bei Kontaktbeheizung längere Heizstrecken benötigt, um eine ausreichende Erwärmung des Filamentbündels oberhalb der Glasumwandlungstemperatur des thermoplastischen Materials zu erhalten. Das Filamentbündel lässt sich jedoch auch vorteilhaft kontaktlos mittels Strahlungsheizer beispielsweise Infrarotstrahlungsheizer auf die gewünschte Temperatur erwärmen. Hierbei können vorteilhaft die Fadenstrecken zwischen Galetten zur Erwärmung des Filamentbündels genutzt werden.

Für die Weiterverarbeitung des Garnes ist es erforderlich, dass der Faden einen ausreichenden Fadenschluss aufweist, der üblicherweise durch sogenannte Verflechtungsknoten erzeugt werden, die beim Verwirbeln des Filamentbündels auftreten. Um eine für das Verwirbeln optimale Fadenspannung an dem Faden einstellen zu können, die insbesondere unabhängig von den vorhergehenden Prozessschritten und den nachfolgenden Prozessschritten ist, wird gemäß einer vorteilhaften Weiterbildung der Erfindung der Faden vor dem Aufwickeln in einem zwischen zwei angetriebenen Galetten gespannten Fadenstück verwirbelt, wobei die Verwirbelung eine Anzahl von mindestens 10 Verflechtungsknoten pro Meter Fadenlänge erzeugt. Durch Einstellung der Geschwindigkeitsdifferenzen der beiden Galetten lässt sich somit eine für die Verwirbelung optimale Fadenspannung einstellen. Die nachgeordneten Prozessschritte wie beispielsweise das Aufwickeln lassen sich mit einer davon unabhängigen Wickelspannung ausführen.

Bei einer weiteren besonders vorteilhaften Verfahrensvariante lässt sich die Führung des Filamentbündels beim Abziehen und Verstrecken z. B. an glatten Manteloberflächen der Galetten dadurch verbessern, dass nach dem Zusammenfassen und vor dem Abziehen des Filamentbündels an dem Filamentbündel ein Drall erzeugt wird. Hierbei ist sicherzustellen, dass der zurückeilende Drall in dem Filamentbündel beim Zusammenfassen gestoppt wird, so dass die Führung der Fäden nach dem Extrudieren und beim Abkühlen hiervon unbeeinflusst bleiben. Der im Fadenlauf voreilende Drall führt jedoch zu einem verbesserten Zusammenhalt der Filamente innerhalb des Filamentbündels.

Die erfindungsgemäße Vorrichtung zur Durchführung des erfindungsgemäßen Verfahrens ist dadurch gekennzeichnet, dass die Präparationseinrichtung in einer Fadenlaufzone zwischen der Verstreckeinrichtung und der Aufwickeleinrichtung angeordnet ist, in welcher der Faden eine Fadenlaufgeschwindigkeit von oberhalb 3.500 m/min. aufweist. Damit lässt sich der Faden beim Verstrecken mit geringem Energieeinsatz zu einer Verstrecktemperatur, die vorzugsweise oberhalb der Glasumwandlungstemperatur des Fadenmaterials liegt, erwärmen.

Die Präparationseinrichtung wird zwischen zwei angetriebenen Galetten angeordnet, um eine Einstellung einer optimalen Fadenspannung zu ermöglichen, durch welche das Filamentbündel in der Fadenlaufzone geführt ist. Den Galetten sind hierzu Einzelantriebe zugeordnet, die unabhängig voneinander steuerbar sind, so dass keine oder geringe Geschwindigkeitsdifferenzen zwischen den beiden Galetten einstellbar sind.

Um die Zuführung des Präparationsfluids kontinuierlich zur Benetzung des Filamentbündels zu gewährleisten, weist die Präparationseinrichtung zum Benetzen des Filamentbündels ein feinporiges Siebblech auf, welches an einer Unterseite mit einem Druckraum zur Zuführung eines Präparationsfluids verbunden ist und welche an einer Oberseite eine gekrümmte Kontaktoberfläche aufweist. Hierbei sind insbesondere sehr dünne Siebbleche, die beispielsweise durch Elektroformen hergestellt werden, besonders geeignet.

Zum Abziehen und verstrecken weist die erfindungsgemäße Vorrichtung vorzugsweise angetriebene Galetten auf, an denen das Filamentbündel mit einfachen Umschlingungen führbar sind und bei welchen zumindest eine Abzugsgalette am Umfang eine Führungsnut zur Führung des Filamentbündels aufweist.

Die Erwärmung des Filamentbündels auf eine Verstrecktemperatur wird bei der erfindungsgemäßen Vorrichtung bevorzugt durch ein der Verstreckeinrichtung zugeordnetes Heizmittel ausgeführt, das durch einen Kontaktheizer und/oder einen Strahtungsheizer gebildet ist. Ebenso wäre der Einsatz eines Konvektionsheizers möglich, bei welchem der Faden beispielsweise durch ein Fluid erwärmt wird.

Zur Herstellung des Fadenschlusses vor dem Aufwickeln des Fadens wird bei der erfindungsgemäßen Vorrichtung durch eine Verwirbelungseinrichtung ausgeführt, die zwischen der Präparationseinrichtung und der Aufwickeleinrichtung angeordnet ist, wobei der Verwirbelungseinrichtung auf einer Zulaufseite und einer Ablaufseite jeweils eine angetriebene Galette zugeordnet ist. Damit lassen sich die gewünschten Fadenspannungen durch Steuerung der Einzelantriebe der Galetten einstellen.

Zur Durchführung der Verfahrensvariante, bei welchem das Filamentbündel einen Drall erhält, weist die erfindungsgemäße Vorrichtung einen dem Sammelfadenführer im Fadenlauf nachgeordneten Drallgeber auf, durch welchen an den Filamentbündeln ein Drall erzeugbar ist. Als Drallgeber werden hierbei bevorzugt Luftdüsen verwendet, bei welchen der an dem Filamentbündel auftreffende Luftstrom eine Verdrehung des Filamentbündels bewirkt.

Das erfindungsgemäße Verfahren sowie die erfindungsgemäße Vorrichtung zur Durchführung des Verfahrens sind nachfolgend anhand einiger Ausführungsbeispiele der erfindungsgemäßen Vorrichtung unter Bezug auf die beigefügten Figuren nachfolgend näher erläutert.

Es stellen dar:
- Fig. 1: schematisch eine Seitenansicht eines ersten Ausführungsbeispiels der erfindungsgemäßen Vorrichtung zur Durchführung des erfindungsgemäßen Verfahrens
- Fig. 2: schematisch eine Vorderansicht des Ausführungsbeispiels nach Fig. 1
- Fig. 3: schematisch eine Vorderansicht eines weiteren Ausführungsbeispiels der erfindungsgemäßen Vorrichtung zur Durchführung des erfindungsgemäßen Verfahrens
- Fig. 4: schematisch eine Seitenansicht eines weiteren Ausführungsbeispiels der erfindungsgemäßen Vorrichtung zur Durchführung des erfindungsgemäßen Verfahrens.

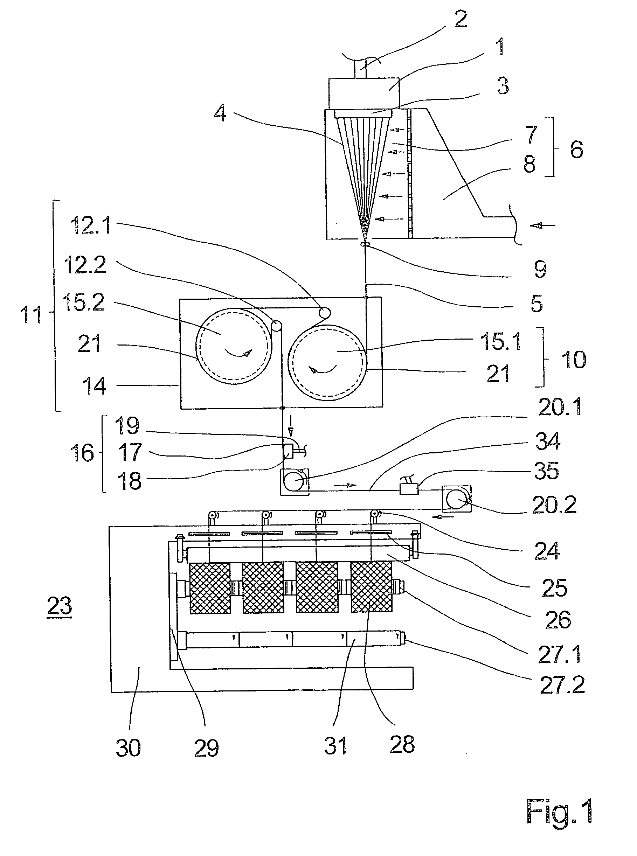

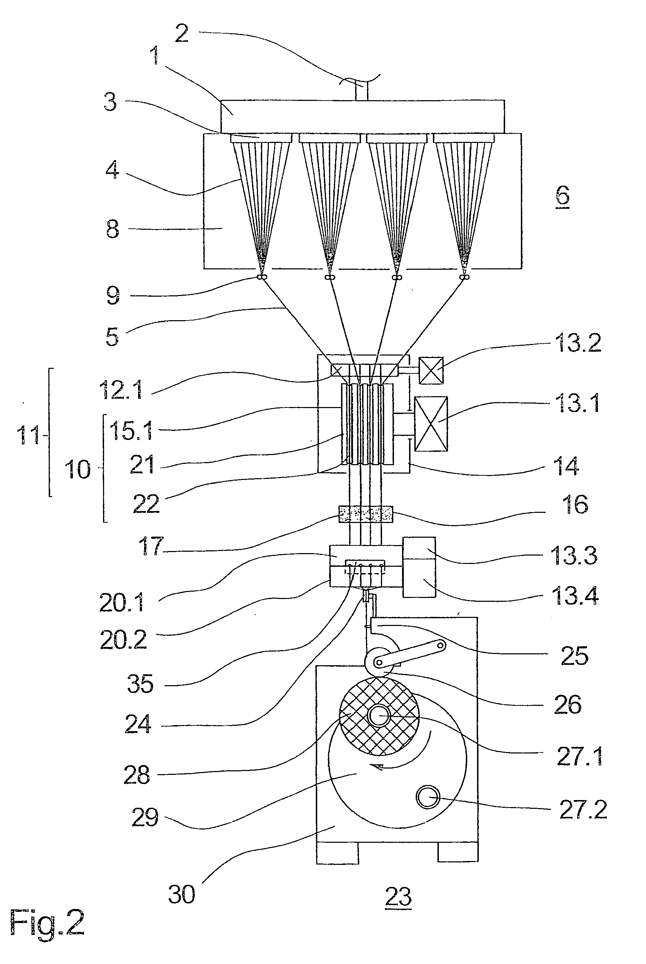

In Fig. 1 und 2 ist ein erstes Ausführungsbeispiel der erfindungsgemäßen Vorrichtung zur Durchführung des erfindungsgemäßen Verfahrens für die Herstellung eines FDY-Garnes in mehreren Ansichten dargestellt. In Fig. 1 ist das Ausführungsbeispiel in einer Seitenansicht und in Fig. 2 in einer Vorderansicht gezeigt. Insoweit kein ausdrücklicher Bezug zu einer der Figuren gemacht ist, gilt die nachfolgende Beschreibung für beide Figuren.

Zum Schmelzspinnen eines multifilen Fadens ist ein beheizbarer Spinnkopf 1 vorgesehen, der an seiner Unterseite eine Spinndüse 3 mit einer Vielzahl von Düsenöffnungen und an seiner Oberseite einen Schmelzezulauf 2 aufweist. Der Schmelzezulauf 2 ist mit einer hier nicht dargestellten Schmelzequelle beispielsweise einem Extruder gekoppelt. Innerhalb des Spinnkopfes 1 können weitere schmelzeführende und schmelzefördernde Bauteile angeordnet sein, auf die an dieser Stelle nicht näher eingegangen wird.

Der Spinnkopf träg an seiner Unterseite mehrere Spinndüsen 3, um gleichzeitig mehrere Fäden parallel nebeneinander zu spinnen. Die nachfolgenden Einrichtungen und Aggregate werden jedoch nur anhand eines Fadenlaufs näher erläutert. Grundsätzlich wird jeder der insgesamt vier parallel nebeneinander erzeugten Fäden gleich behandelt, wobei die Anzahl der Spinndüsen und Fäden in dem Ausführungsbeispiel nur beispielhaft ist. So lassen sich auch mehr als vier Fäden parallel spinnen, verstrecken und aufwickeln.

Unterhalb des Spinnkopfes 1 ist eine Abkühleinrichtung 6 vorgesehen, die aus einem Kühlschacht 8 und einer Anblasvorrichtung 7 gebildet ist. Der Kühlschacht 8 ist derart unterhalb der Spinndüse 3 angeordnet, dass die Vielzahl der durch die Spinndüse 3 extrudierten Filamente 4 den Kühlschacht 8 durchlaufen. Über die Anblasvorrichtung 7 lässt sich eine Kühlluftstrom erzeugen, der in den Kühlschacht 8 eingeleitet wird, so dass die durch die Spinndüse 3 extrudierten Filamente 4 gleichmäßig abgekühlt werden.

Unterhalb des Kühlschachtes 8 ist ein Sammelfadenführer 7 vorgesehen, um die Filamente 4 zu einem Filamentbündel 5 zusammenzuführen. Der Sammelfadenführer 9 ist hierzu mittig unterhalb der Spinndüse 3 angeordnet, so dass die Filamente 4 in dem Sammelfadenführer 9 gleichmäßig zusammengeführt werden.

Um das Filamentbündel 5 aus der Spinnzone abzuziehen und anschließend zu verstrecken, ist unterhalb des Sammelfadenführers 9 eine Abzugsgalette 10 und eine mit der Abzugsgalette 10 zusammenwirkende Verstreckeinrichtung 11 angeordnet. In diesem Ausführungsbeispiel wird die Abzugsgalette 10 durch eine angetriebene Heiztrommel 15.1 gebildet. Die Heiztrommel 15.1 weist einen Heizmantel 21 auf, der auf eine Temperatur im Bereich von 80°C bis 220°C erwärmt ist, die oberhalb der Glasumwandlungstemperatur des jeweiligen Fadenmaterials liegt.

Wie aus der Darstellung in Fig. 2 hervorgeht, sind in dem Heizmantel 21 der Heiztrommel 15.1 pro Filamentbündel 5 jeweils eine Führungsnut 22 vorgesehen. Das Filamentbündel 5 wird innerhalb der Führungsnut 22 am Umfang der Heiztrommel 15.1 mit einer Teilumschlingung geführt. Dabei wird die Heiztrommel 15.1 durch den Antrieb 13.2 mit einer Umfangsgeschwindigkeit angetrieben, die oberhalb 1.200 m/min vorzugsweise oberhalb 1.500 m/min liegt.

Wie aus den Fig. 1 und 2 zu entnehmen ist, ist der Heiztrommel 15.1 eine Ablaufgalette 12.1 zugeordnet. Die Ablaufgalette 12.1 wird durch den Antrieb 13.2 im Wesentlichen mit gleicher Umfangsgeschwindigkeit wie die Heiztrommel 15.1 angetrieben. Die Ablaufgalette 12.1 ist dem Umfang der Heiztrommel 15.1 derart zugeordnet, dass das Filamentbündel 5 mit möglichst großer Umschlingung, z.B. mit 300° Umschlingungswinkel an dem Heizmantel 21 geführt ist.

Wie aus der Fig. 1 hervorgeht, weist die Streckeinrichtung 1 eine zweite Heiztrommel 15.2 auf, die seitlich neben der ersten Heiztrommel 15.1 angeordnet ist. Die zweite Heiztrommel 15.2 ist ebenfalls mit einem Antrieb (hier nicht dargestellt) gekoppelt, der den Heizmantel 21 mit einer Streckgeschwindigkeit von oberhalb 3.500m/min, vorzugsweise oberhalb 4.000 m/min. antreibt. Der Heizmantel 21 der Heiztrommel 15.2 ist genauso wie der Heizmantel der ersten Heiztrommel 15.1 ebenfalls beheizt, um an dem Filamentbündel nach dem Verstrecken eine Relaxationsbehandlung ausführen zu können. Die Verstreckung des Filamentbündels 5 erfolgt somit zwischen den Heiztrommeln 15.1 und 15.2.

Der Heiztrommel 15.2 ist ebenfalls am Umfang eine Ablaufgalette 12.2 zugeordnet, die über einen hier nicht dargestellten Antrieb angetrieben wird. Die Umfangsgeschwindigkeit der Ablaufgalette 12.2 ist in diesem Fall gleich der Umfangsgeschwindigkeit der Heiztrommel 15.2. Auch hierbei ist die Ablaufgalette 12.2 derart platziert, dass das Filamentbündel 5 möglichst mit großer Umschlingung an dem Heizmantel 21 der zweiten Heiztrommel 15.2 geführt wird.

Die Heiztrommel 15.1 und 15.2 sowie beide Ablaufgaletten 12.1 und 12.2 sind innerhalb einer Galettenbox 14 angeordnet. Hierzu wird das Filamentbündel 5 über einen Einlass der Galettenbox 14 und über einen Auslass der Galettenbox 14 geführt.

Unterhalb der Verstreckeinrichtung 11 ist in einer Fadenlaufzone zwischen der Verstreckeinrichtung 11 und einer nachfolgenden Aufwickeleinrichtung 23 eine Präparationseinrichtung 16 angeordnet. Die Präparationseinrichtung 16 ist hierbei unmittelbar auf der Ablaufseite der Verstreckeinrichtung 11 gehalten, wobei das der Präparationseinrichtung 16 zugeordnete Fadenstück des Filamentbündels 5 zwischen der Ablaufgalette 12.2 und einer der Präparationseinrichtung 16 nachgeordneten Führungsgalette 20.1 gespannt ist. Die Führungsgalette 20.1 ist mit einem Antrieb gekoppelt, so dass zwischen der Ablaufgalette 12.2 und der Führungsgalette 20.1 eine Geschwindigkeitsdifferenz einstellbar ist.

Die Präparationseinrichtung 16 ist in diesem Ausführungsbeispiel durch ein feinporiges Siebblech 17 gebildet, das an seiner Unterseite mit einem Druckraum 18 verbunden ist und das an seiner Oberseite eine gekrümmte Kontaktfläche aufweist, an welcher das Filamentbündel 5 mit Kontakt geführt ist. Der Druckraum 18 ist über einen Fluidanschluss 19 mit einer Druckquelle verbunden, durch welche ein Präparationsfluid kontinuierlich den Druckraum 18 zugeführt wird. Eine derartige Präparationsvorrichtung ist beispielsweise aus der EP 1 590 512 bekannt, so dass an dieser Stelle Bezug zu der zitierten Druckschrift genommen wird, um die Funktion zu erläutern.

Oberhalb der Aufwickeleinrichtung 23 ist eine weitere Führungsgalette 20.2 vorgesehen, die an einer Stirnseite der Aufwickeleinrichtung 23 gehalten ist. Die zweite Führungsgalette 20.2 ist ebenfalls mit einem Antrieb gekoppelt. Zwischen den Führungsgaletten 20.1 und 20.2 ist in dem gespannten Fadenstück eine Verwirbelungseinrichtung 35 angeordnet, um in dem Faden 34 einen Fadenschluss durch Bildung von Verflechtungsknoten zu erzeugen. Hierbei lässt sich die Fadenspannung zum Verwirbeln des Fadens 34 vorteilhaft durch eine zwischen den Führungsgaletten 20.1 und 20.2 eingestellte Differenzgeschwindigkeit bestimmen.

Unterhalb der Führungsgaletten 20.1 und 20.2 ist die Aufwickeleinrichtung 23 angeordnet. Die Aufwickeleinrichtung 23 wird in diesem Ausführungsbeispiel durch eine sogenannte Spulrevolvermaschine gebildet, welche einen drehbaren Spindelträger 29 mit zwei frei auskragenden Spulspindeln 27.1 und 27.2 aufweist. Der Spindelträger 29 ist in einem Maschinengestell 30 gelagert. Dabei lassen sich die Spulspindeln 27.1 und 27.2 abwechselnd in einen Betriebsbereich zum Wickeln einer Spule und in einen Wechselbereich zum Auswechseln der Spule führen. In dem Maschinengestell ist eine Changiervorrichtung 25 und eine Andrückwalze 26 vorgesehen, um den Faden 34 zu einer Spule 28 zu wickeln. Hierbei liegt die Andrückwalze 26 mit Kontakt an der Oberfläche der Spule 28 an. Die Changiervorrichtung 25 weist zu jedem der Fäden eine Changiereinheit auf, in welcher der Faden zur Bildung einer Kreuzspule hin- und hergeführt wird. Oberhalb der Changiereinrichtung ist ein Kopffadenführer 24 vorgesehen, durch welche der Einlauf des Fadens in die Wickelstelle geführt ist. In diesem Ausführungsbeispiel wird der Kopffadenführer 24 durch frei drehbare Umlenkrollen gebildet, um den von der Führungsgalette 20.2 ablaufenden Faden aus einer im wesentlichen horizontalen Verteilebene heraus zu der Wickelstelle umzulenken. Damit lassen sich Aufspreizungen der Fäden zu beiden Wickelstellen vermeiden, da die Fäden üblicherweise an den Galetten mit engem Fadenabstand geführt sind.

Zur Herstellung eines FDY-Garnes wird bei dem in Fig. 1 und 2 dargestellten Ausführungsbeispiel eine Polymerschmelze beispielsweise aus einem Polyester oder einem Polyamid dem Spinnkopf 1 zugeführt. Innerhalb der Spinndüse 3 wird die Polymerschmelze unter Druck durch die an der Unterseite der Spinndüse 3 ausgebildeten Düsenbohrungen gedrückt, um eine Vielzahl von Filamenten zu extrudieren. Innerhalb des Kühlschachtes 8 werden die Filamente auf eine Temperatur unterhalb der Glasumwandlungstemperatur des thermoplastischen Materials abgekühlt, so dass eine Verfestigung und eine Vororientierung an den Filamenten eintritt. Nach der Abkühlung der Filamente 4 werden diese zu einem Filamentbündel 5 zusammengeführt, wobei jedoch kein Präparationsfluid zugeführt wird, so dass die Filamente 4 des Filamentbündels 5 ohne Fremdmittel zusammengehalten werden. Anschließend wird das Filamentbündel 5 nach dem Zusammenfassen in trockenem Zustand mit einer Abzugsgeschwindigkeit von oberhalb 1.500 m/min. abgezogen und einer Verstreckung zugeführt. Die Abzugsgalette wird in diesem Ausführungsbeispiel durch die Heiztrommel 15.1 gebildet, die einen beheizten Heizmantel 21 aufweist, um das Filamentbündel 5 mit den Filamenten 4 auf eine Temperatur oberhalb der Glasumwandlungstemperatur des thermoplastisehen Materials zu erwärmen. Der Heizmantel weist hierzu eine Oberflächentemperatur im Bereich von 80° bis 220°C auf. So liegt die Glasumwandlungstemperatur beispielsweise eines Polyesters im Bereich von 80°C. Um eine vollständige Verstreckung des Filamentbündels 5 und damit eine Orientierung der Molekularstruktur des Fadenmaterials in den Filamenten 4 zu erhalten, wird das Filamentbündel 5 mit einer Streckgeschwindigkeit von oberhalb 4.000 m/min. verstreckt. Die Streckgeschwindigkeit wird in diesem Ausführungsbeispiel durch eine zweite Heiztrommel 15.2 erzeugt, an welcher gleichzeitig eine Nachbehandlung in Form einer Relaxation an dem Filamentbündel 5 ausgeführt wird.

Nachdem das Filamentbündel 5 vollständig verstreckt ist, erfolgt eine Präparierung, um einen Fadenschluss der Filamentbündel 5 und damit den Faden 34 zu bilden. Das Filamentbündel 5 wird hierzu zwischen zwei angetriebenen Galetten geführt und präpariert. Dabei wird das Filamentbündel 5 mit einer Teilumschlingung an der gekrümmten Kontaktfläche eines feinporigen Siebbelches geführt, an dessen Oberfläche kontinuierlich ein Präparationsfluid austritt. So lässt sich eine gleichmäßige Verteilung des Präparationsfluids innerhalb des Filamentbündels 5 erreichen, wobei das Filamentbündel 5 bandförmig an der Kontaktfläche geführt wird. Damit können alle Filamente 4 gleichermaßen benetzt werden.

Es besteht jedoch auch die Möglichkeit, das Präparationsmittel durch zusätzliche Anblasungen des Filamentbündels 5 zu vergleichmäßigen oder gänzlich durch andere Mittel beispielsweise einem Präparationsstift auf das Filamentbündel auf zutragen.

Vor dem Aufwickeln des voll verstreckten Fadens 34 wird der Fadenschluss durch eine Verwirbelungseinrichtung 35 fixiert, in dem eine Vielzahl von Verflechtungsknoten in dem Faden 34 erzeugt werden. So wird in dem FDY-Garn eine Mindestanzahl von 10 Knoten pro laufenden Meter Fadenlänge erzeugt.

Das erfindungsgemäße Verfahren und die erfindungsgemäße Vorrichtung zeichnen sich insbesondere durch einen geringen Energieeinsatz auf, um eine Verstreckung der Fäden durchzuführen. So lässt sich das trockene Filamentbündel in kürzerer Zeit und mit weniger Energie auf eine Strecktemperatur aufheizen, selbst bei den üblichen hohen Produktionsgeschwindigkeiten bis zu 6.000 m/min, und darüber.

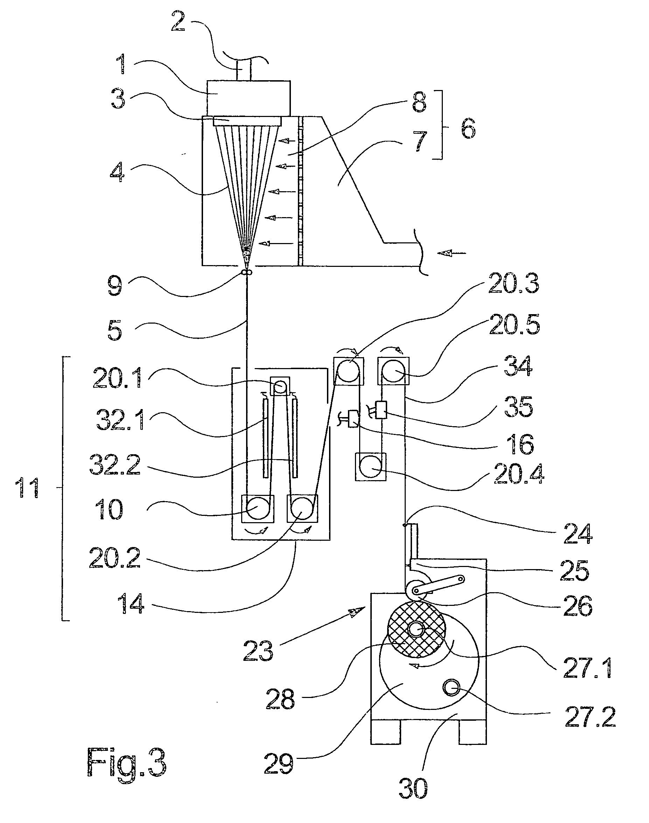

In Fig. 3 ist ein weiteres Ausführungsbeispiel der erfindungsgemäßen Vorrichtung zur Durchführung des erfindungsgemäßen Verfahrens zur Herstellung eines vollverstreckten Fadens zu einem FDY-Garn schematisch gezeigt. Das Ausführungsbeispiel ist in einer Vorderansicht gezeigt, wobei nur ein Fadenlauf dargestellt ist. Auch hierbei ist es üblich, mehrere Fäden parallel nebeneinander zu spinnen, verstrecken und aufzuwickeln.

Die in Fig. 3 dargestellte Gesamtvorrichtung unterscheidet sich im Wesentlichen in der Verstreckeinrichtung 11. Die Einrichtungen zum Schmelzspinnen der Filamente sowie die Einrichtungen zum Aufwickeln des multifilen Fadens sind im Wesentlichen identisch zu dem vorgenannten Ausführungsbeispiel nach Fig. 1 und 2, so dass an dieser Stelle Bezug zu der vorgenannten Beschreibung genommen wird und anschließend nur die Unterschiede erläutert werden.

Zum Abziehen und Verstrecken des Filamentbündels 5 ist unterhalb des Kühlschachtes 8 ein System mit mehreren Führungsgaletten 10, 20.1, 20.2 vorgesehen. Die Galetten 10, 20.1, 20.2 der Verstreckeinrichtung 11 sind innerhalb einer Galettenbox 14 unterhalb des Kühlschachtes 8 angeordnet. Die Verstreckeinrichtung 11 umfasst hierzu eine Abzugsgalette 10, die unmittelbar dem Sammelfadenfiihrer 9 nachgeordnet ist, um das Filamentbündel 5 aus der Spinnzone abzuziehen. Der Abzugsgalette 10 folgen zwei weitere Führungsgaletten 20.1 und 20.2. Jede der Galetten 10, 20.1 und 20.2 weist einen eigenen Antrieb auf, um zwischen den Galetten Geschwindigkeitsdifferenzen einstellen zu können. Die Galetten 10, 20.1 und 20.2 sind von dem Filamentbündel 5 im Wesentlichen mit einem Umschlingungswinkel von ca. 180° umschlungen, wobei zwischen der Abzugsgalette 10 und der Führungsgalette 20.1 sowie der Führungsgalette 20.2 und der Führungsgalette 20.1 jeweils eine Heizstrecke gebildet ist, in welcher das Filamentbündel 5 beheizbar ist. Den Heizstrecken sind hierzu zwei Strahlungsheizer 32.1 und 32.2 zugeordnet. Die Strahlungsheizer 32.1 und 32.2 können beispielsweise durch Infrarotstrahlungskörper gebildet sein, durch welchen das Filamentbündel 5 ohne Kontakt nur durch Wärmestrahlung auf eine Temperatur oberhalb der Glasumwandlungstemperatur des jeweiligen Fadenmaterials erwärmt wird. Die Verstreckung des Filamentbündels 5 erfolgt dabei vorteilhaft zwischen der Abzugsgalette 10 und der Führungsgalette 20.1. Es ist jedoch auch möglich, die Verstreckung des Filamentbündels 5 in zwei Schritten durchzuführen, so dass eine erste Teilverstreckung zwischen der Abzugsgalette 10 und der Führungsgalette 20.1 und eine zweite Teilverstreckung zwischen der Galette 20.1 und der Galette 20.2 erfolgt.

Nach der Verstreckung wird das Filamentbündel 5 über die nachfolgenden Führungsgaletten 20.3, 20.4 und 20.5 geführt. Jede der Führungsgaletten 20.3 bis 20.5 weist einen Antrieb auf, so dass die zwischen den Galetten gespannten Fadenstücke des Filamentbündels 5 in ihrer Fadenspannung einstellbar sind.

In dem Fadenstück zwischen der Führungsgalette 20.3 und der Führungsgalette 20.4 ist eine Präparationseinrichtung 16 angeordnet, durch welche das Filamentbündel 5 mit einem Präparationsfluid benetzt wird. Die Präparationseinrichtung 16 ist identisch zu dem Ausführungsbeispiel nach Fig. 1 und 2, so dass keine weitere Erläuterung an dieser Stelle erfolgt.

In dem zwischen den Führungsgaletten 20.4 und 20.5 gespannten Fadenstück ist eine Verwirbelungseinrichtung 35 vorgesehen, um den Faden 34 zu verwirbeln und dabei den Fadenschluss des Fadens durch Verflechtungsknoten zu verbessern. Anschließend wird der Faden 34 von der Führungsgalette 20.5 zur Aufwickeleinrichtung 23 geführt, in welcher der Faden 34 zu einer Spule 28 gewickelt wird. In diesem Ausführungsbeispiel wird der Faden 34 aus einer vertikalen Verteilung heraus auf die einzelnen Wickelstellen verteilt. Insoweit würden bei paralleler Führung mehrerer Fäden diese nach Ablauf von der Führungsgalette 20.5 in axialer Richtung der Aufwickeleinrichtung aufgespreizt und auf die einzelnen Wickelstellen verteilt.

Das in Fig. 3 dargestellte Ausführungsbeispiel ist insoweit ebenfalls geeignet, um das erfindungsgemäße Verfahren zur Herstellung eines FDY-Garnes auszuführen. Die Galetten zum Abziehen, Verstrecken und Führen des Filamentbündels und des Fadens werden jeweils teilumschlungen, wobei insbesondere die Abzugsgalette sowie die Führungsgaletten der Streckeinrichtung eine umlaufende Führungsnut zur Führung des Filamentbündels aufweisen könnten.

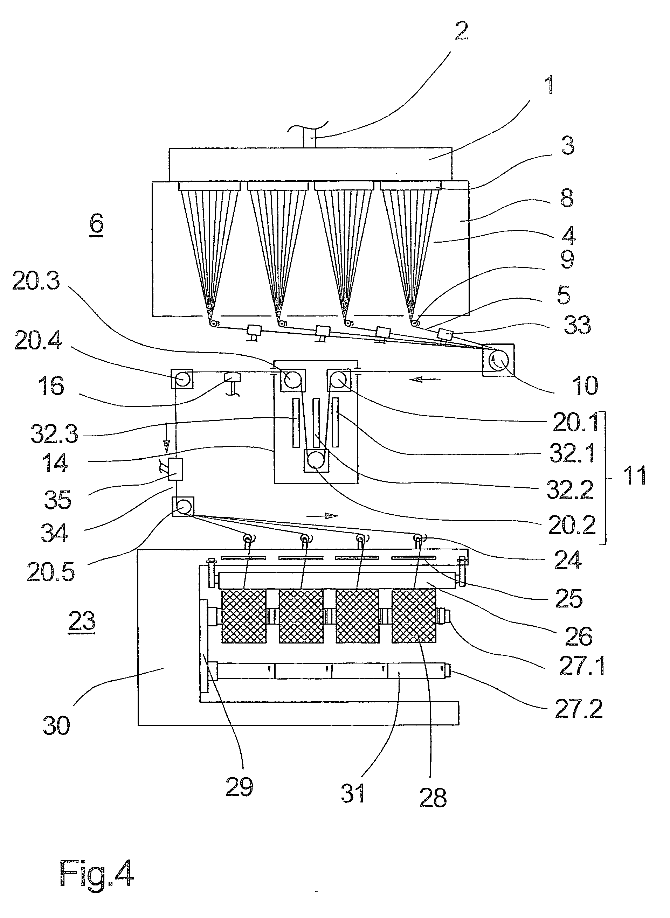

In Fig. 4 ist ein weiteres Ausführungsbeispiel der erfindungsgemäßen Vorrichtung zur Durchführung des erfindungsgemäßen Verfahrens schematisch in einer Seitenansicht gezeigt. Das Ausführungsbeispiel nach Fig. 4 ist im Wesentlichen identisch zu dem Ausführungsbeispiel nach Fig. 3, so dass auf die vorgenannte Beschreibung Bezug genommen wird und nachfolgend nur die Unterschiede erläutert werden.

Bei dem in Fig. 4 dargestellten Ausführungsbeispiel sind die an dem Spinnkopf 1 gehaltenen Spinndüsen in einer reihenförmigen Anordnung gehalten, die parallel zu den Spulspindeln 27.1 und 27.2 der Aufwickeleinrichtung 23 liegen. Um eine möglichst kompakte Anordnung der gesamten Vorrichtung zu erhalten, werden die Filamentbündel 5 nach dem Extrudieren durch eine seitlich neben den Spinndüsen 3 angeordnete Abzugsgalette 10 abgezogen. Die Sammelfadenführer 9 werden in diesem Fall durch Umlenkrollen gebildet, die an ihrem Umfang eine Sammelnut aufweisen. Die Abzugsgalette 10 ist bevorzugt mit einem beheizten Galettenmantel ausgeführt, so dass eine Teilerwärmung des Filamentbündels 5 erfolgt. Auch hierbei sind am Umfang des beheizten Galettenmantels der Abzugsgalette 10 Führungsnuten vorgesehen, in welchem das Filamentbündel 5 aufläuft.

In den zwischen den Sammelfadenführern 9 und der Abzugsgalette 10 gespannten Fadenstück ist ein Drallgeber 33 angeordnet, um an dem Filamentbündel 5 einen Drall zu erzeugen. Der Drallgeber 33 wird bevorzugt durch Luftdüsen ausgeführt, bei welchem ein Luftstrom erzeugt wird, der an dem Filamentbündel 5 ein Drehmoment bewirkt.

Bei diesem Ausführungsbeispiel ist die Verstreckeinrichtung 11 der Abzugsgalette 10 nachgeordnet. Die Verstreckeinrichtung wird hierzu durch mehrere Führungsgaletten 20.1, 20.2 und 20.3 gebildet, die innerhalb einer Galettenbox 14 angeordnet sind. Zwischen den freien Führungsstrecken sind mehrere Strahlungsheizer 32.1, 32.2 und 32.3 angeordnet, um das Filamentbündel 5 zu erwärmen. Das Ausführungsbeispiel nach Fig. 4 der Verstreckeinrichtung 11 ist insoweit besonders geeignet, um zwischen der ersten Führungsgalette 20.1 und der zweiten Führungsgalette 20.2 eine vollständige Verstreckung auszuführen. In dem zwischen der Führungsgalette 20.2 und 20.3 gespannten Fadenstück des Filamentbündels 5 lässt sich eine Nachbehandlung in Form einer Relaxation ausführen.

Der Verstreckeinrichtung 11 folgen zwei weitere Führungsgaletten 20.4 und 20.5, wobei der Führungsgalette 20.4 eine Präparationseinrichtung 16 vorgeordnet ist. Die Präparationseinrichtung 16 ist identisch zu den vorgenannten Ausführungsbeispielen ausgeführt, so dass das Filamentbündel 5 nach dem Verstrecken mit einem Präparationsfluid, das üblicherweise aus einer Öl-Wasser-Emulsion besteht, zu präparieren.

Zur Verbesserung des Fadenschlusses wird an dem Faden 34 durch die Verwirbelungseinrichtung 35 eine Mehrzahl von Verflechtungsknoten erzeugt. Anschließend wird der Faden 34 über die Führungsgalette 20.5 zu der Aufwickeleinrichtung geführt. Die Aufwickeleinrichtung ist identisch zu dem Ausführungsbeispiel nach Fig. 1 und 2 ausgeführt, so dass an dieser Stelle keine weitere Erläuterung erfolgt.

Das in Fig. 4 dargestellte Ausführungsbeispiel ist insbesondere geeignet, um das erfindungsgemäße Verfahren mit einer sehr kompakten Anordnung der Einrichtungen ausführen zu können.

### Bezugszeichenliste

- 1: Spinnkopf
- 2: Schmelzezulauf
- 3: Spinndüse
- 4: Filamente
- 5: Filamentbündel
- 6: Abkühleinrichtung
- 7: Anblasvornchtung
- 8: Kühlschacht
- 9: Sammelfadenführer
- 10: Abzugsgalette
- 11: Verstreckeinrichtung
- 12: Ablaufgalette
- 13.1, 13.2, 13.3: Antriebe
- 14: Galettenbox
- 15.1, 15.2: Heiztrommel
- 16: Präparationseinrichtung
- 17: Siebblech
- 18: Druckraum
- 19: Fluidanschluss
- 20.1,20.2: Führungsgalette
- 21: Heizmantel
- 22: Führungsnut
- 23: Aufwickeleinrichtung
- 24: Kopffadenführer
- 25: Changiervornchtung
- 26: Andrückwalze
- 27.1, 27.2: Spulspindel
- 28: Spule
- 29: Spindelträger
- 30: Maschinengestell
- 31: Spulhülse
- 32.1, 32.2: Strahlungsheizer
- 33: Drallgeber
- 34: Faden
- 35: Verwirbelungseinrichtung

## Patentansprüche

1. Verfahren zum Schmelzspinnen, Verstrecken und Aufwickeln eines multifilen Fadens zu einem FDY-Garn in folgenden Schritten:
1.1. Extrudieren einer Vielzahl von Filamenten aus einer thermoplastischen Schmelze;
1.2. Abkühlen der Filamente auf eine Temperatur unterhalb der Glasumwandlungstemperatur des thermoplastischen Materials;
1.3. Zusammenfassen der Filamente zu einem Filamentbündel ohne Zuführung eines Fluids;
1.4. Abziehen des Filamentbündels mit einer Abzugsgeschwindigkeit im Bereich oberhalb 1 500 m/min;
1.5. Erwärmen des Filamentbündels auf eine Temperatur oberhalb der Glasumwandlungstemperatur des thermoplastischen Materials und Verstrecken des Filamentbündels mit einer Streckgeschwindigkeit im Bereich oberhalb 3.500, vorzugsweise 4.000 m/min;
1.6. Präparieren des Filamentbündels mit einem Präparationsfluid und
1.7. Aufwickeln des Fadens zu einer Spule.

2. Verfahren nach Anspruch 1,
**dadurch gekennzeichnet, dass**
das Filamentbündel in einem zwischen zwei angetriebenen Galetten gespannten Fadenstück präpariert wird.

3. Verfahren nach Anspruch 2,
**dadurch gekennzeichnet, dass**
das Filamentbündel zum Präparieren an einer gekrümmten Kontaktfläche eines feinporigen Siebbleches geführt wird, an dessen Unterseite kontinuierlich das Präpartionsfluid zugeführt wird.

4. Verfahren nach einem der Ansprüche 1 bis 3,
**dadurch gekennzeichnet, dass**
zum Abziehen und Verstrecken das Filamentbündel mit einfachen Umschlingungen am Umfang von angetriebenen Galetten geführt wird, wobei das Filamentbündel zumindest an einer Abzugsgalette in einer umlaufenden Führungsnut geführt ist.

5. Verfahren nach einem der Ansprüche 1 bis 4,
**dadurch gekennzeichnet, dass**
das Filamentbündel durch Kontakt zu einer beheizten Oberfläche und/ oder ohne Kontakt durch Wärmestrahlung und/oder durch Konvektion beheizt wird.

6. Verfahren nach einem der Ansprüche 1 bis 5,
**dadurch gekennzeichnet, dass**
der Faden vor dem Aufwickeln in einem zwischen zwei angetrieben Galetten gespannten Fadenstück verwirbelt wird und dass durch die Verwirbelung eine Anzahl von mindestens 10 Verflechtungsknoten pro Meter Fadenlänge erzeugt werden.

7. Verfahren nach Anspruch 6,
**dadurch gekennzeichnet, dass**
zum Verwirbeln eine Fadenspannung in dem Fadenstück des Fadens durch Einstellung einer Differenzgeschwindigkeit der beiden Galetten erzeugt wird.

8. Verfahren nach einem der Ansprüche 1 bis 7,
**dadurch gekennzeichnet, dass**
nach dem Zusammenfassen und vor dem Abziehen des Filamentbündels an dem Filamentbündel ein Drall erzeugt wird.

9. Vorrichtung zur Durchführung des Verfahrens nach einem der Ansprüche 1 bis 8, mit einer Spinndüse (3) zum Extrudieren mehrerer Filamente (4), mit einer Abkühleinrichtung (6) zum Abkühlen der Filamente (4), mit einem Sammelfadenführer (9) zum Zusammenfassen der Filamente (4) zu einem Filamentbündel (5), mit einem Abzugsmittel (10) zum Abziehen des Filamentbündels (5), mit einer Verstreckeinrichtung (11) zum Verstrecken des Filamentbündels (5), mit einer Aufwickeleinrichtung (23) zum Aufwickeln des Fadens (34) und mit einer Präparationseinrichtung (16) zum Präparieren des Filamentbündels (5),
**dadurch gekennzeichnet, dass**
die Präparationseinrichtung (16) in einer Fadenlaufzone zwischen der Verstreckeinrichtung (11) und der Aufwickeleinrichtung (23) angeordnet ist, in welcher das Filamentbündel (5) eine Fadenlaufgeschwindigkeit von oberhalb 3.500 m/min aufweist.

10. Vorrichtung nach Anspruch 9,
**dadurch gekennzeichnet, dass**
die Präparationseinrichtung (16) zwischen zwei angetriebenen Galetten (20.3, 20.4) angeordnet ist, durch welche das Filamentbündel (5) in der Fadenlauf zone geführt ist.

11. Vorrichtung nach Anspruch 9 oder 10,
**dadurch gekennzeichnet, dass**
die Präparationseinrichtung (16) zum Benetzen des Filamentbündels (5) ein feinporiges Siebblech (7) aufweist, welches an einer Unterseite mit einem Druckraum (18) zur Zuführung eines Präparationsfluid verbunden ist und welches an einer Oberseite eine gekrümmte Kontaktfläche aufweist.

12. Vorrichtung nach einem der Ansprüche 9 bis 11,
**dadurch gekennzeichnet, dass**
das Abzugsmittel (10) und die Verstreckeinrichtung (11) durch angetriebene Galetten gebildet sind, durch welche das Filamentbündel (5) mit einfachen Umschlingungen führbar ist, und dass eine dem Abzugsmittel (10) zugeordnete Abzugsgalette (10) am Umfang eine umlaufende Führungsnut (22) auf weist.

13. Vorrichtung nach einem der Ansprüche 9 bis 12,
**dadurch gekennzeichnet, dass**
die Verstreckeinrichtung (11) zumindest ein Heizmittel (21, 32.1, 32.2) auf weist und dass das Heizmittel (21, 32.1, 32.2) durch einen Kontaktheizer (21) und/oder einem Strahlungsheizer (32.1) gebildet ist.

14. Vorrichtung nach einem der Ansprüche 9 bis 13,
**dadurch gekennzeichnet, dass**
im Fadenlauf zwischen der Präparationseinrichtung (16) und der Aufwickeleinrichtung (23) eine Verwirbelungseinrichtung (35) angeordnet ist, wobei der Verwirbelungseinrichtung (35) auf einer Zulaufseite und einer Ablaufseite jeweils eine angetriebene Galette (20.4 - 20.5) zugeordnet ist.

15. Vorrichtung nach einem der Ansprüche 9 bis 14,
**dadurch gekennzeichnet, dass**
dem Sammelfadenführer (9)im Fadenlauf ein Drallgeber (33) nachgeordnet ist, durch welchen an dem Filamentbündel (5) ein Drall erzeugbar ist.

## Claims

1. Method for melt spinning, drawing and winding a multifilament thread to form a FDY-yarn having the following steps:
1.1. extruding a plurality of filaments from thermoplastic melt;
1.2. cooling said filaments to a temperature below the glass transition temperature of said thermoplastic material;
1.3. gathering said filaments to form a filament bundle without adding a fluid;
1.4. drawing-off said filament bundle at a draw-off speed in the range above 1.500 m/min;
1.5. heating said filament bundle to have a temperature above the glass transition temperature of said thermoplastic material and drawing said filament bundle at a drawing speed in the range above 3.500, preferably above 4.000 m/min;
1.6. preparing said filament bundle with a preparation fluid and
1.7. winding said thread to form a spool.

2. Method according to claim 1,
**characterized in that**
said filament bundle is prepared in a piece of yarn tensioned between two driven godets.

3. Method according to claim 2,
**characterized in that**
said filament bundle is guided at a curved contact surface of a perforated plate having fine pores, at the bottom side of which said preparation fluid is being continuously supplied.

4. Method according to one of the claims 1 to 3,
**characterized in that**
for drawing-off and drawing, said filament bundle is guided having single wraparounds at the circumference of driven godets, said filament bundle being guided in a circumferential guiding groove at least one draw-off godet.

5. Method according to one of the claims 1 to 4,
**characterized in that**
said filament bundle is heated by contacting a heated surface and / or without contact by radiant heat and / or by convection.

6. Method according to one of the claims 1 to 5,
**characterized in that** said
thread is mingled in a piece of yarn tensioned between two driven godets prior to winding, and **in that** said mingling creates an amount of at least 10 interweaving knots for every meter thread length.

7. Method according to claim 6,
**characterized in that**
a thread tension for mingling is created in said piece of yarn of said thread by adjusting a differential speed at both godets.

8. Method according to one of the claims 1 to 7,
**characterized in that**
a twist is created at said filament bundle after gathering and prior to drawing-off said filament bundle.

9. Device for performing said method according to one of the claims 1 to 8, comprising a spinneret (3) for extruding a plurality of filaments (4), comprising a cooling device (6) for cooling said filaments (4), comprising a collective yarn guide (9) for gathering said filaments (4) to form a filament bundle (5), comprising a draw-off means (10) for drawing-off said filament bundle (5), comprising a drawing device (11) for drawing said filament bundle (5), comprising a winding device (23) for winding said thread (34), and comprising a preparation device (16) for preparing said filament bundle (5),
**characterized in that**
said preparation device (16) is disposed in a zone of the thread course between said drawing device (11) and said winding device (23), in which said filament bundle (5) has a thread-running speed being above 3.500 m/min.

10. Device according to claim 9,
**characterized in that**
said preparation device (16) is disposed between two driven godets (20.3, 20.4), by means of which said filament bundle (5) is guided in said zone of said thread course.

11. Device according to claim 9 or 10,
**characterized in that**
said preparation device (16) comprises a perforated plate (7) with fine pores for humidifying said filament bundle (5), being connected with a pressure chamber (18) at a bottom side for supplying a preparation fluid and comprising a curved contact surface at a top side.

12. Device according to one of the claims 9 to 11,
**characterized in that**
said draw-off means (10) and said drawing device (11) are formed by driven godets, by means of which said filament bundle (5) is guidable having single wraparounds, and **in that** a draw-off godet (10) associated with said draw-off means (10) comprises a circumferential guiding groove (22) at the circumference.

13. Device according to one of the claims 9 to 12,
**characterized in that**
said drawing device (11) comprises at least one heating means (21, 32.1, 32.2) and **in that** said heating means (21, 32.1, 32.2) is formed by a contact heater (21) and/or a radiant heater (32.1).

14. Device according to one of the claims 9 to 13,
**characterized in that**
a mingling device (35) is disposed in the thread course between said preparation device (16) and said winding device (23), said mingling device (35) being associated with a driven godet (20.4 - 20.5) each at a feed side as well as at a delivery side, respectively.

15. Device according to one of the claims 9 to 14,
**characterized in that**
said collective yarn guide (9) has a downstream twister (33) in the thread course, by means of which a twist is creatable at said filament bundle (5).

## Revendications

1. Procédé de filage à l'état fondu, d'étirage et d'enroulement d'un fil multifilaire en fil filé FDY par les étapes suivantes :
1.1. extrusion d'une multiplicité de filaments d'une fonte thermoplastique ;
1.2 refroidissement des filaments à une température en dessous de la température de transition vitreuse du matériau thermoplastique ;
1.3. réunion des filaments en un faisceau de filaments sans alimentation d'un fluide ;
1.4. retirage du faisceau de filaments avec une vitesse de retirage de l'ordre d'au dessus de 1.500 m/min ;
1.5. chauffage du faisceau de filaments à une température au dessus de la température de transition vitreuse du matériau thermoplastique et étirage du faisceau de filaments avec une vitesse d'étirage de l'ordre d'au dessus de 3.500, de préférence 4.000 m/min ;
1.6. préparation du faisceau de filaments avec un fluide de préparation et
1.7. enroulement du fil en une bobine.

2. Procédé selon la revendication 1, **caractérisé en ce que** le faisceau de filaments est préparé dans un tronçon de fil tendu entre deux galettes entraînées.

3. Procédé selon la revendication 2, **caractérisé en ce que** pour être préparé le faisceau de filaments est guidé sur la surface de contact courbée d'une tôle de criblage à pores fines, sur la face inférieure de laquelle le fluide de préparation est alimenté continuellement.

4. Procédé selon l'une des revendications 1 à 3, **caractérisé en ce que** pour le retirage et l'étirage le faisceau de filaments est guidé avec de simples enlacements sur la circonférence de galettes entraînées, le faisceau de filaments étant guidé au moins sur une galette de retirage dans une rainure de guidage s'étendant de façon circonférentielle.

5. Procédé selon l'une des revendications 1 à 4, **caractérisé en ce que** le faisceau de filaments est chauffé par le contact avec une surface chauffée et/ou sans contact, par rayonnement thermique et/ou par convection.

6. Procédé selon l'une des revendications 1 à 5, **caractérisé en ce qu'**avant d'être enroulé le fil est tourbillonné dans un tronçon de fil tendu entre deux galettes entraînées et **en ce que** dû au tourbillonnement on génère un nombre d'au moins 10 noeuds d'entrelacement par mètre longueur de fil.

7. Procédé selon la revendication 6, **caractérisé en ce que** pour le tourbillonnement une tension de fil est générée dans le tronçon de fil du fil par l'ajustement d'une vitesse différentielle des deux galettes.

8. Procédé selon l'une des revendications 1 à 7, **caractérisé en ce qu'**après le regroupement et avant le retirage du faisceau de filaments une torsion est générée dans le faisceau de filaments.

9. Dispositif pour la mise en oeuvre du procédé selon l'une des revendications 1 à 8, avec une filière (3) pour l'extrusion d'une pluralité de filaments (4), avec une installation de refroidissement (6) pour refroidir les filaments (4), avec un guide-fil de recueil (9) pour le regroupement des filaments (4) en un faisceau de filaments (5), avec un moyen de retirage (10) pour retirer le faisceau de filaments (5), avec une installation d'étirage (11) pour étirer le faisceau de filaments (5), avec une installation d'enroulement (23) pour enrouler le fil (34) et avec une installation de préparation (16) pour préparer le faisceau de filaments (5), **caractérisé en ce que** l'installation de préparation (16) est agencée dans une zone de trajet de fil entre l'installation d'étirage (11) et l'installation d'enroulement (23), dans laquelle le faisceau de filaments (5) a une vitesse de trajet de fil d'au dessus de 3.500 m/min.

10. Dispositif selon la revendication 9, **caractérisé en ce que** l'installation de préparation (16) est agencée entre deux galettes entraînées (20.3, 20.4) par lesquelles le faisceau de filaments (5) est guidé dans la zone de trajet de fil.

11. Dispositif selon la revendication 9 ou 10, **caractérisé en ce que** pour le mouillage du faisceau de filaments (5) l'installation de préparation (16) a une tôle de criblage à pores fines (7) qui sur une face inférieure est reliée à une chambre à pression (18) pour l'alimentation d'un fluide de préparation et qui sur une face supérieure a une surface de contact courbée.

12. Dispositif selon l'une des revendications 9 à 11, **caractérisé en ce que** le moyen de retirage (10) et l'installation d'étirage (11) sont formés par des galettes entraînées par lesquelles le faisceau de filaments (5) peut être guidé par de simples enlacements et **en ce qu'**une galette de retirage (10) attribuée au moyen de retirage (10) a une rainure de guidage sur la circonférence qui s'étend de manière périphérique (22).

13. Dispositif selon l'une des revendications 9 à 12, **caractérisé en ce que** l'installation d'étirage (11) a au moins un moyen de chauffage (21, 32.1, 32.2) et **en ce que** le moyen de chauffage (21, 32.1, 32.2) est formé par un chauffage à contact (21) et/ou un chauffage à rayonnement (32.1).

14. Dispositif selon l'une des revendications 9 à 13, **caractérisé en ce qu'**une installation de tourbillonnement (35) est agencée dans le trajet de fil entre l'installation de préparation (16) et l'installation d'enroulement (23), une galette entraînée (20.4 - 20.5) étant respectivement associée à l'installation de tourbillonnement (35) sur un coté d'arrivée et un coté de déroulée.

15. Dispositif selon l'une des revendications 9 à 14, **caractérisé en ce que** le guide-fil de recueil (9) est suivi par un transmetteur de torsion (33) dans le trajet de fil, par lequel une torsion peut être générée sur le faisceau de filaments (5).
